# EUROPEAN PATENT APPLICATION

(11) **EP 4 059 980 A1**
(43) Date of publication of application: **21.09.2022**
(21) Application number: 20887268.9
(22) Date of filing: 11.11.2020
(51) Int. Cl.: C08G 64/20, C08G 64/30, C08J 5/00, C08L 69/00, C08L 1/02, C08K 3/04, C08K 7/02

(54) **POLYCARBONATE COMPOSITE USING SOLID DISPERSION OR MOLTEN DISPERSION OF ANHYDROSUGAR ALCOHOL, PRODUCING METHOD THEREOF, AND MOLDED ARTICLE COMPRISING SAME**

(30) Priority: 11.11.2019 KR 20190143202; 11.11.2019 KR 20190143203
(71) Applicant: Samyang Corporation, Jongno-gu Seoul 03129 (KR)
(72) Inventor: IM, Jun Seop, Hwaseong-si Gyeonggi-do 18496 (KR); SONG, Gwang Seok, Jeonju-si Jeollabuk-do 55021 (KR); RYU, Hoon, Daejeon 35235 (KR); YOO, Seung Hyun, Daejeon 34637 (KR)
(74) Representative: Wohlfahrt, Jan Günther
(86) International application number: PCT/KR2020/015757
(87) International publication number: WO 2021/096213

(57) **Abstract**

The present invention relates to a polycarbonate composite, a producing method thereof, and a molded article comprising same. More specifically, the present invention relates to: a polycarbonate composite comprising a matrix resin, which is a polycarbonate resin in which an anhydrosugar alcohol is copolymerized, and a nanomaterial dispersed in the matrix resin, wherein the polycarbonate composite exhibits a more remarkably improved tensile modulus and tensile strength than a conventional biopolycarbonate resin composite, by using, as a diol component, a solid dispersion or molten dispersion obtained by introducing a nanomaterial (dispersible substance) into an anhydrosugar alcohol (dispersion medium) in the form of an aqueous dispersion at the time of manufacture, and has uniform physical properties as the nanomaterial is uniformly dispersed in the composite; a producing method thereof; and a molded article comprising same.

## Description

### TECHNICAL FIELD

The present invention relates to a polycarbonate composite and a method for preparing the same, and a molded article comprising the same, and more specifically, a polycarbonate composite comprising a matrix resin which is polycarbonate resin having anhydrosugar alcohol copolymerized therein, and nanomaterial dispersed in the matrix resin, wherein the composite uses, as diol component, a solid dispersion or melt dispersion obtained by incorporating nanomaterial (dispersoid) as aqueous dispersion form into anhydrosugar alcohol (dispersion medium) during preparation thereof, and thereby, as compared with conventional bio polycarbonate resin composites, exhibits remarkably improved tensile modulus and tensile strength and has uniform dispersion of the nanomaterial in the composite and accordingly uniform properties; and a method for preparing the same and a molded article comprising the same.

### BACKGROUND ART

Nanomaterials such as nanocellulose can be prepared from biomass through various methods, and recently, many researches including incorporating the nanomaterial into polyurethane to improve mechanical properties and the like have been proceeded. However, due to the hydrophilicity of nanocellulose, most of the products are prepared by using about 1 % by weight of the nanomaterial dispersed in water as dispersion medium, and so there is limitation in application thereof to prepare composite material with polymer resin.

In addition, if nanocellulose in solid crystal or powder form is used directly without being dispersed in water, etc., the tangling phenomenon (aggregation) of nanocellulose occurs, and so the properties of polymer resin composite material prepared therefrom become lower and not uniform.

Therefore, it has been requested to develop a resin composite comprising a matrix resin and nanomaterial dispersed therein, wherein the nanomaterial is uniformly dispersed in the matrix resin even in higher amount than the conventional level, and thus the properties (particularly, tensile modulus and tensile strength) of the resin composite are remarkably improved as compared with conventional resin composites.

### CONTENTS OF THE INVENTION

### PROBLEMS TO BE SOLVED

The purpose of the present invention is to provide a polycarbonate composite which, as compared with conventional bio polycarbonate resin composites, exhibits remarkably improved tensile modulus and tensile strength and has uniform dispersion of the nanomaterial in the composite and accordingly uniform properties; and a method for preparing the same and a molded article comprising the same.

### TECHNICAL MEANS

In order to achieve the above technical purpose, the present invention provides a polycarbonate composite comprising: matrix resin and nanomaterial dispersed in the matrix resin, wherein the matrix resin is polycarbonate resin which is a polymerization reaction product of a diol component comprising a solid dispersion or melt dispersion of anhydrosugar alcohol in which the nanomaterial is dispersed, and a carbonic acid diester component, and wherein the solid dispersion or melt dispersion of anhydrosugar alcohol is that obtained by incorporating the nanomaterial as aqueous dispersion form into the anhydrosugar alcohol.

Other aspect of the present invention provides a method for preparing a polycarbonate composite, comprising a step of polymerization reaction of a diol component comprising a solid dispersion or melt dispersion of anhydrosugar alcohol in which the nanomaterial is dispersed, and a carbonic acid diester component, wherein the solid dispersion or melt dispersion of anhydrosugar alcohol is that obtained by incorporating the nanomaterial as aqueous dispersion form into the anhydrosugar alcohol.

Another aspect of the present invention provides a molded article comprising the polycarbonate composite of the present invention.

### EFFECT OF THE INVENTION

The polycarbonate composite according to the present invention exhibits remarkably improved tensile modulus and tensile strength and has uniform dispersion of the nanomaterial in the composite and accordingly uniform properties, as compared with conventional bio polycarbonate resin composites, particularly resin composites prepared by using nanomaterial (e.g., nanocellulose) in solid crystal or powder form directly without being dispersed in water, etc.

### CONCRETE MODE FOR CARRYING OUT THE INVENTION

The present invention will be explained in detail below.

The polycarbonate composite of the present invention comprises matrix resin and nanomaterial dispersed in the matrix resin.

In the present invention, the "nanomaterial" means organic or inorganic material having a sub-micron size (length or diameter), i.e., less than 1 micrometer (for example, 10 to 900 nm, or 10 to 500 nm).

For such a nanomaterial, a material satisfying the above meaning of nanomaterial can be used and, for example, it can be selected from the group consisting of nanocellulose, carbon nanofiber, carbon nanotube, iron, aluminum, chromium, nickel, cobalt, zinc, tungsten, indium, tin, palladium, zirconium, titanium, copper, silver, gold, platinum, kaolin, clay, talc, mica, silica, bentonite, dolomite, calcium silicate, magnesium silicate, asbestos, calcium carbonate, magnesium carbonate, barium carbonate, calcium sulfate, barium sulfate, aluminum sulfate, aluminum hydroxide, iron hydroxide, aluminum silicate, zirconium oxide, magnesium oxide, aluminum oxide, titanium oxide, iron oxide, zinc oxide, antimony trioxide, indium oxide, indium tin oxide, silicon carbide, silicon nitride, boron nitride, barium titanate, diatomite, carbon black, rock wool, graphene, graphite, graphene oxide, azo-based compound, diazo-based compound, condensed azo-based compound, thioindigo-based compound, indanthrone-based compound, quinacridone-based compound, anthraquinone-based compound, benzimidazolone-based compounds, perylene-based compounds, phthalocyanine-based compounds, anthrapyridine-based compounds, dioxazine-based compounds, polyethylene resins, polypropylene resins, polyester resins, nylon resins, polyamide resins, aramid resins, urethane resins, polystyrene resins, polylactic acid, cellulose acetate fiber, hemicellulose, lignin, chitin, chitosan, starch, or mixture thereof.

In an embodiment, the nanomaterial can be selected from the group consisting of nanocellulose, carbon nanofiber, carbon nanotube or mixture thereof, but it is not limited thereto.

In an embodiment, the nanocellulose can be selected from the group consisting of nanocellulose fiber, nanocellulose crystal or mixture thereof.

In an embodiment, the carbon nanotube can be selected from the group consisting of single-walled carbon nanotube, multi-walled carbon nanotube or mixture thereof.

In an embodiment, the amount of the nanomaterial in the polycarbonate composite of the present invention may be, based on total weight of the composite, 0.2 % by weight or more, 0.3 % by weight or more, 0.4 % by weight or more, 0.5 % by weight or more or 0.55 % by weight or more, and 10 % by weight or less, 9 % by weight or less, 8 % by weight or less, 7 % by weight or less or 6.5 % by weight or less, and for example, from 0.2 % by weight to 10 % by weight, more concretely from 0.5 % by weight to 10 % by weight, and still more concretely from 0.5 % by weight to 7 % by weight. If the amount of the nanomaterial in the composite is lower than the above level, the effect of improving mechanical properties such as tensile modulus and tensile strength, etc. of the composite may be little, and if higher than the above level, it is not easy to disperse the nanomaterial in the matrix resin and so the nanomaterial cannot be dispersed uniformly, and accordingly it may be hard to obtain a resin composite with uniform properties.

The matrix resin comprised in the polycarbonate composite of the present invention is polycarbonate resin which is a polymerization reaction product of a diol component comprising a solid dispersion or melt dispersion of anhydrosugar alcohol in which the nanomaterial is dispersed, and a carbonic acid diester component, and the solid dispersion or melt dispersion of anhydrosugar alcohol is that obtained by incorporating the nanomaterial as aqueous dispersion form into the anhydrosugar alcohol.

Anhydrosugar alcohol can be prepared by dehydration reaction of hydrogenated sugar derived from natural product. Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

In the present invention, the anhydrosugar alcohol can be monoanhydrosugar alcohol, dianhydrosugar alcohol or mixture thereof, and can be obtained in a procedure for preparing anhydrosugar alcohol by dehydration reaction of hydrogenated sugar (for example, hexitol such as sorbitol, mannitol, iditol, etc.).

Monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or mixture of two or more of the foregoing.

Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environment-friendly material derived from recyclable natural resources, it has received much interest for a long time and researches on its production continue to proceed. Among such dianhydrosugar alcohols, isosorbide produced from sorbitol has the widest industrial applicability at present. In the present invention, the kind of the dianhydrosugar alcohol is not especially limited, and it may be preferably dianhydrohexitol, and more concretely 1,4:3,6-dianhydrohexitol. 1,4:3,6-dianhydrohexitol may be isosorbide, isomannide, isoidide or mixture of two or more of the foregoing, and preferably may be isosorbide.

In an embodiment, the solid dispersion of anhydrosugar alcohol is a room-temperature solid dispersion obtained by adding the nanomaterial as aqueous dispersion form (for example, where 0.1 to 5 % by weight of the nanomaterial is dispersed in water) to anhydrosugar alcohol and mixing them uniformly, melting the mixture at a temperature equal to or higher than the melting point of the anhydrosugar alcohol (for example, a temperature of 80°C or higher) while removing moisture therefrom under vacuum, and then cooling the melted mixture to room temperature.

In an embodiment, the melt dispersion of anhydrosugar alcohol is a liquid dispersion obtained by adding the nanomaterial as aqueous dispersion form (for example, where 0.1 to 5 % by weight of the nanomaterial is dispersed in water) to anhydrosugar alcohol and mixing them uniformly, and melting the mixture at a temperature equal to or higher than the melting point of the anhydrosugar alcohol (for example, a temperature of 80°C or higher) while removing moisture therefrom under vacuum. In the present invention, such a melt-state dispersion can be used directly, without being cooled to solid, in preparing the polycarbonate resin.

In an embodiment, the amount of the nanomaterial incorporated into the solid dispersion or melt dispersion of anhydrosugar alcohol may be, based on total weight of the solid dispersion or melt dispersion, 0.2 % by weight or more, 0.3 % by weight or more, 0.4 % by weight or more, 0.5 % by weight or more, 0.6 % by weight or more, 0.7 % by weight or more, 0.8 % by weight or more, 0.9 % by weight or more or 1 % by weight or more, and 15 % by weight or less, 14 % by weight or less, 13 % by weight or less, 12 % by weight or less, 11 % by weight or less or 10 % by weight or less, and for example, from 0.2 % by weight to 15 % by weight, more concretely from 0.5 % by weight to 12 % by weight, and still more concretely from 1 % by weight to 10 % by weight.

The matrix resin comprised in the polycarbonate composite of the present invention is polycarbonate resin which is a polymerization reaction product of a diol component comprising such a solid dispersion or melt dispersion of anhydrosugar alcohol, and a carbonic acid diester component.

In an embodiment, the carbonic acid diester component may be a carbonic acid diester component represented by the following chemical formula 1: 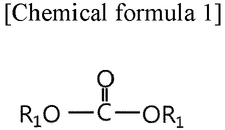 wherein each R₁ may independently be selected from unsubstituted or halogen-substituted, alkyl group having 1 to 20 carbon atoms, aryl group having 6 to 20 carbon atoms or aralkyl group having 7 to 25 carbon atoms.

In an embodiment, the carbonic acid diester component represented by the above chemical formula 1 may be selected from the group consisting of diphenyl carbonate, bischlorophenyl carbonate, dimethyl carbonate, diethyl carbonate, di-t-butyl carbonate or mixture thereof, and more preferably, diphenyl carbonate or dimethyl carbonate may be used.

In an embodiment, the diol component may further comprise additional diol component other than the solid dispersion or melt dispersion of anhydrosugar alcohol.

In an embodiment, the additional diol component may be a diol component represented by the following chemical formula 2:

[Chemical formula 2] HO-X-OH

wherein X represents mononuclear or polynuclear arylene group having 6 to 30 carbon atoms; linear alkylene group having 1 to 15 carbon atoms; branched alkylene group having 3 to 15 carbon atoms; or cyclic alkylene group having 3 to 15 carbon atoms, and each of the arylene group, linear alkylene group, branched alkylene group and cyclic alkylene group may be unsubstituted or substituted with halogen atom, alkyl group, cycloalkyl group, alkenyl group, alkoxy group, aryl group, nitro group or carboxyl group.

In an embodiment, in the above chemical formula 2, the halogen atom may be F, Cl or Br, the alkyl group may be an alkyl group having 1 to 20 carbon atoms (more concretely, alkyl group having 1 to 13 carbon atoms, and for example, methyl, ethyl, propyl or butyl), the cycloalkyl group may be a cycloalkyl group having 3 to 10 carbon atoms (more concretely, cycloalkyl group having 3 to 6 carbon atoms), the alkenyl group may be an alkenyl group having 2 to 20 carbon atoms (more concretely, alkenyl group having 2 to 13 carbon atoms), the alkoxy group may be an alkoxy group having 1 to 20 carbon atoms (more concretely, alkoxy group having 1 to 13 carbon atoms, and for example, methoxy, ethoxy, propoxy or butoxy), and the aryl group may be an aryl group having 6 to 30 carbon atoms (more concretely, aryl group having 6 to 20 carbon atoms, and for example, phenyl, tolyl, xylenyl, or naphthyl).

In an embodiment, in the above chemical formula 2, X may be an arylene group which can be derived from substituted or unsubstituted bisphenol (e.g., bisphenol A, bisphenol F or bisphenol TMC, etc.), substituted or unsubstituted resorcinol, substituted or unsubstituted hydroquinone (e.g., hydroquinone, 2-nitro hydroquinone, 2-sulfonyl hydroquinone, etc.), substituted or unsubstituted biphenol, substituted or unsubstituted naphthalenediol, or substituted or unsubstituted diphenylphenol, and for example, it may be represented by one of the following chemical formulas 2a to 2h:

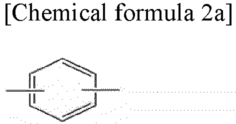

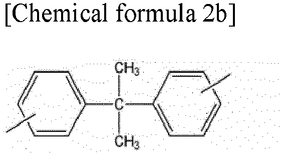

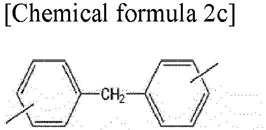

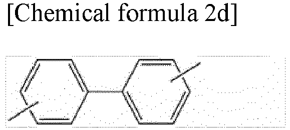

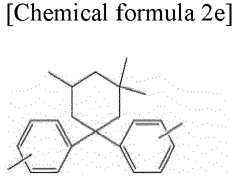

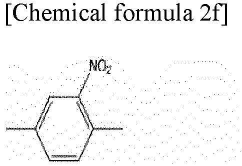

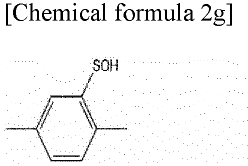

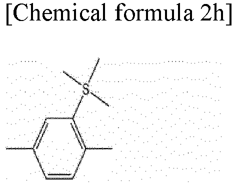

In an embodiment, in the above chemical formula 2, X may be an alkylene group which can be derived from substituted or unsubstituted ethylene glycol, substituted or unsubstituted propylene glycol, or substituted or unsubstituted butanediol, etc., and for example, it may be ethylene group, propylene group or butylene group.

In an embodiment, in the above chemical formula 2, X may be a cycloalkylene group which can be derived from substituted or unsubstituted cyclohexane diol, substituted or unsubstituted cyclohexane dimethanol, or substituted or unsubstituted tetramethylcyclobutane diol, and for example, it may be represented by one of the following chemical formulas 2i to 2k:

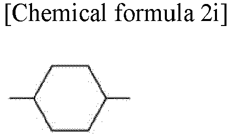

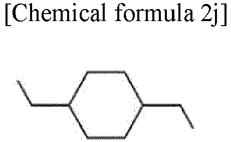

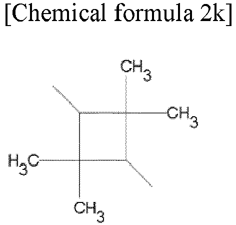

In an embodiment, the diol component represented by the above chemical formula 2 may be aromatic diol, aliphatic diol, alicyclic diol other than anhydrosugar alcohol, or mixture thereof.

As the aromatic diol, for example, bisphenol (e.g., bisphenol A, bisphenol F, bisphenol TMC, etc.), resorcinol, hydroquinone, biphenol, naphthalene diol, or mixture thereof, each of which is unsubstituted or substituted with halogen atom, alkyl group, cycloalkyl group, alkenyl group, alkoxy group, aryl group, nitro group or carboxyl group, may be used, and preferably bisphenol A unsubstituted or substituted with halogen atom, alkyl group, cycloalkyl group, alkenyl group, alkoxy group, aryl group, nitro group or carboxyl group may be used.

The aliphatic diol may be, for example, an aliphatic diol having 2 to 10 carbon atoms which is unsubstituted or substituted with halogen atom, alkyl group, cycloalkyl group, alkenyl group, alkoxy group, aryl group, nitro group or carboxyl group, and it may be, for example, ethylene glycol, diethylene glycol, triethylene glycol, propane diol (1,2-propane diol and 1,3-propane diol, etc.), butane diol (1,2-butane diol, 1,3-butane diol and 1,4-butanediol, etc.), pentanediol (1,2-pentanediol, 1,3-pentanediol, 1,4-pentanediol and 1,5-pentanediol, etc.), hexanediol (1,2-hexanediol, 1,3-hexanediol, 1,4-hexanediol, 1,5-hexanediol and 1,6-hexanediol, etc.), neopentyl glycol, or mixture thereof, and preferably it may be butane diol.

The alicyclic diol other than anhydrosugar alcohol may be, for example, cyclohexane diol (1,2-cyclohexane diol, 1,3-cyclohexane diol and 1,4-cyclohexane diol, etc.), cyclohexane dimethanol (1,2-cyclohexane dimethanol, 1,3-cyclohexane dimethanol and 1,4-cyclohexane dimethanol, etc.), tetramethylcyclobutane diol or mixture thereof, each of which is unsubstituted or substituted with halogen atom, alkyl group, cycloalkyl group, alkenyl group, alkoxy group, aryl group, nitro group or carboxyl group, and preferably it may be cyclohexane diol.

In an embodiment, the polycarbonate resin may have a number average molecular weight (Mn) of from 10,000 to 70,000, more concretely from 15,000 to 50,000, and still more concretely from 20,000 to 40,000. If the number average molecular weight is less than 10,000, there is a problem in achieving sufficient mechanical properties, and if it is greater than 70,000, the molecular weight becomes too high, rendering the melting property poor and the processing difficult.

In an embodiment, in preparing the polycarbonate resin, the use amount of the carbonic acid diester component may be, 0.8 mole to 1.2 mole (more concretely, 0.9 mole to 1.1 mole) per 1 mole of total diol component including the anhydrosugar alcohol and additional diol, and these components may be polymerized (for example, melt polymerization) in the presence of polymerization catalyst.

As the polymerization catalyst, alkali metal salt compound (e.g., sodium hydroxide, sodium carbonate, potassium carbonate, sodium hydrogen carbonate, potassium hydrogen carbonate, cesium carbonate, etc.); alkaline earth metal salt compound (e.g., calcium hydroxide, barium oxide, magnesium oxide, etc.); nitrogen-containing basic compound (e.g., tetramethylammonium hydroxide, tetraethylammonium hydroxide and triethylamine, etc.); or mixture thereof, etc. may be used, and they can be used alone, or in combination of two or more thereof. Among them, it is more preferable to use nitrogen-containing basic compound and alkali metal salt compound in combination.

The use amount of the polymerization catalyst may be preferably 1×10⁻⁹ to 1×10⁻³ molar equivalent, and more preferably 1×10⁻⁸ to 5×10⁻⁴ molar equivalent, for 1 mole of the the carbonic acid diester component.

The melt polymerization may be conducted at an elevated temperature, for example, 140°C to 240°C (more concretely, 160°C to 220°C) under atmospheric pressure or reduced pressure (for example, 0.1 torr to 120 torr).

In an embodiment, the melt polymerization may be conducted by a process comprising: mixing and reacting the above-explained solid dispersion or melt dispersion of anhydrosugar alcohol, carbonic acid diester and optionally additional diol component under atmospheric pressure at a temperature of from 140°C to 240°C (for example, 160°C) in the presence of polymerization catalyst, and then reacting under reduced pressure (for example, 120 torr or lower, concretely, 0.1 torr to 120 torr) at a temperature of from 160°C to 240°C while removing the byproduct alcohol (for example, phenol or methanol, etc.).

The polycarbonate composite according to the present invention exhibits remarkably improved tensile modulus and tensile strength and has uniform dispersion of the nanomaterial in the composite and accordingly uniform properties, as compared with conventional bio polycarbonate resin composites, particularly resin composites prepared by using nanomaterial (e.g., nanocellulose) in solid crystal or powder form directly without being dispersed in water, etc.

In an embodiment, the polycarbonate composite of the present invention can exhibit a tensile strength greater than 80 MPa.

In an embodiment, the polycarbonate composite of the present invention can exhibit a tensile modulus greater than 2,500 MPa.

For example, the tensile strength and tensile modulus may be the values measured by using universal test machine (UTM) according to ASTM D638.

In addition, in the polycarbonate composite according to the present invention, the nanomaterial is dispersed uniformly in the matrix resin, and thus the properties (particularly, tensile strength and tensile modulus) can be maintained uniformly, as compared with conventional resin composites.

In an embodiment, the polycarbonate composite of the present invention can exhibit a tensile strength standard deviation of 3 MPa or less.

More concretely, the tensile strength standard deviation may be 2.5 MPa or less, 2.0 MPa or less, 1.5 MPa or less, 1.3 MPa or less, 1.2 MPa or less, 1.15 MPa or less, or 1.12 MPa or less.

In an embodiment, the polycarbonate composite of the present invention can exhibit a tensile modulus standard deviation of 200 MPa or less.

More concretely, the tensile modulus standard deviation may be 100 MPa or less, 50 MPa or less, 30 MPa or less, 10 MPa or less, 9 MPa or less, 8.5 MPa or less, 8.35 MPa or less, or 8.3 MPa or less.

For example, the tensile strength standard deviation and tensile modulus standard deviation may be the standard deviations of the values measured for four (4) samples by using universal test machine (UTM) according to ASTM D638.

Other aspect of the present invention provides a method for preparing a polycarbonate composite, comprising a step of polymerization reaction of a diol component comprising a solid dispersion or melt dispersion of anhydrosugar alcohol in which the nanomaterial is dispersed, and a carbonic acid diester component, wherein the solid dispersion or melt dispersion of anhydrosugar alcohol is that obtained by incorporating the nanomaterial as aqueous dispersion form into the anhydrosugar alcohol.

In an embodiment, the solid dispersion of anhydrosugar alcohol is a room-temperature solid dispersion obtained by adding the nanomaterial as aqueous dispersion form (for example, where 0.1 to 5 % by weight of the nanomaterial is dispersed in water) to anhydrosugar alcohol and mixing them uniformly, melting the mixture at a temperature equal to or higher than the melting point of the anhydrosugar alcohol (for example, a temperature of 80°C or higher) while removing moisture therefrom under vacuum, and then cooling the melted mixture to room temperature.

In an embodiment, the melt dispersion of anhydrosugar alcohol is a liquid dispersion obtained by adding the nanomaterial as aqueous dispersion form (for example, where 0.1 to 5 % by weight of the nanomaterial is dispersed in water) to anhydrosugar alcohol and mixing them uniformly, melting the mixture at a temperature equal to or higher than the melting point of the anhydrosugar alcohol (for example, a temperature of 80°C or higher) while removing moisture therefrom under vacuum.

The nanomaterial, anhydrosugar alcohol, carbonic acid diester component, and additional diol component used in the above preparation method are the same as those explained above. In addition, the solid dispersion or melt dispersion of anhydrosugar alcohol and preparation methods thereof, and the polymerization reaction of diol component and carbonic acid diester component are the same as those explained above.

Another aspect of the present invention provides a molded article comprising the polycarbonate composite of the present invention.

In the polycarbonate composite of the present invention, the nanomaterial is dispersed uniformly in the composite, and thus the composite can have uniform properties (particularly, tensile strength and tensile modulus), and accordingly the properties of a molded article comprising the composite are excellent and uniform, resulting in very low defective rate in product application.

There is no special limitation to the method for preparing a molded article by processing the polycarbonate composite of the present invention, and any method generally used in the field of plastic processing may be used to prepare the molded article. For example, the molded article of the present invention can be prepared by extrusion or injection molding of the polycarbonate composite of the present invention.

The present invention is explained in more detail through the following Examples and Comparative Examples. However, the scope of the present invention is not limited thereby in any manner.

### EXAMPLES

### [Part I]

### [Preparation of solid dispersion comprising nanocellulose]

### <Dispersion comprising nanocellulose fiber (NCF) and anhydrosugar alcohol>

### Preparation Example I-A1: Preparation of dispersion comprising 1 % by weight of nanocellulose fiber

Into a rotary evaporator, 99g of isosorbide (NOVASORB^{®}, Samyang Corporation) and 100g of aqueous solution (KB101, Asia Nanocellulose Co. Ltd.) wherein 1 % by weight of nanocellulose fiber was dispersed, were fed and mixed uniformly. Then, under a temperature condition of 80°C which was higher than the melting point of isosorbide, the mixture was melted while removing moisture under vacuum. Then, the melted mixture was cooled to room temperature to prepare isosorbide comprising nanocellulose fiber dispersed therein (solid dispersion). The solid dispersion comprised 1 % by weight of nanocellulose fiber, based on total weight of the solid dispersion.

### Preparation Example I-A2: Preparation of dispersion comprising 3 % by weight of nanocellulose fiber

Excepting that the amount of isosorbide was changed from 99g to 97g and the amount of aqueous solution containing 1 % by weight of dispersed nanocellulose fiber was changed from 100g to 300g, the same method as Preparation Example I-A1 was conducted to prepare isosorbide comprising nanocellulose fiber dispersed therein (solid dispersion). The solid dispersion comprised 3 % by weight of nanocellulose fiber, based on total weight of the solid dispersion.

### Preparation Example I-A3: Preparation of dispersion comprising 5 % by weight of nanocellulose fiber

Excepting that the amount of isosorbide was changed from 99g to 95g and the amount of aqueous solution containing 1 % by weight of dispersed nanocellulose fiber was changed from 100g to 500g, the same method as Preparation Example I-A1 was conducted to prepare isosorbide comprising nanocellulose fiber dispersed therein (solid dispersion). The solid dispersion comprised 5 % by weight of nanocellulose fiber, based on total weight of the solid dispersion.

### Preparation Example I-A4: Preparation of dispersion comprising 10 % by weight of nanocellulose fiber

Excepting that the amount of isosorbide was changed from 99g to 90g and the amount of aqueous solution containing 1 % by weight of dispersed nanocellulose fiber was changed from 100g to 1,000g, the same method as Preparation Example I-A1 was conducted to prepare isosorbide comprising nanocellulose fiber dispersed therein (solid dispersion). The solid dispersion comprised 10 % by weight of nanocellulose fiber, based on total weight of the solid dispersion.

### <Dispersion comprising nanocellulose crystal (NCC) and anhydrosugar alcohol>

### Preparation Example I-B1: Preparation of dispersion comprising 1 % by weight of nanocellulose crystal

Excepting that 100g of aqueous solution (CelluForce) containing 1 % by weight of dispersed nanocellulose crystal was used instead of 100g of aqueous solution (KB101, Asia Nanocellulose Co. Ltd.) containing 1 % by weight of dispersed nanocellulose fiber, the same method as Preparation Example I-A1 was conducted to prepare isosorbide comprising nanocellulose crystal dispersed therein (solid dispersion). The solid dispersion comprised 1 % by weight of nanocellulose crystal, based on total weight of the solid dispersion.

### Preparation Example I-B2: Preparation of dispersion comprising 3 % by weight of nanocellulose crystal

Excepting that the amount of isosorbide was changed from 99g to 97g and 300g of aqueous solution containing 1 % by weight of dispersed nanocellulose crystal was used instead of 100g of aqueous solution containing 1 % by weight of dispersed nanocellulose fiber, the same method as Preparation Example I-A1 was conducted to prepare isosorbide comprising nanocellulose crystal dispersed therein (solid dispersion). The solid dispersion comprised 3 % by weight of nanocellulose crystal, based on total weight of the solid dispersion.

### Preparation Example I-B3: Preparation of dispersion comprising 5 % by weight of nanocellulose crystal

Excepting that the amount of isosorbide was changed from 99g to 95g and 500g of aqueous solution containing 1 % by weight of dispersed nanocellulose crystal was used instead of 100g of aqueous solution containing 1 % by weight of dispersed nanocellulose fiber, the same method as Preparation Example I-A1 was conducted to prepare isosorbide comprising nanocellulose crystal dispersed therein (solid dispersion). The solid dispersion comprised 5 % by weight of nanocellulose crystal, based on total weight of the solid dispersion.

### Preparation Example I-B4: Preparation of dispersion comprising 10 % by weight of nanocellulose crystal

Excepting that the amount of isosorbide was changed from 99g to 90g and 1,000g of aqueous solution containing 1 % by weight of dispersed nanocellulose crystal was used instead of 100g of aqueous solution containing 1 % by weight of dispersed nanocellulose fiber, the same method as Preparation Example I-A1 was conducted to prepare isosorbide comprising nanocellulose crystal dispersed therein (solid dispersion). The solid dispersion comprised 10 % by weight of nanocellulose crystal, based on total weight of the solid dispersion.

### <Dispersion comprising a mixture of nanocellulose fiber and nanocellulose crystal, and anhydrosugar alcohol>

### Preparation Example I-C1: Preparation of dispersion comprising 1 % by weight of a mixture of nanocellulose fiber and nanocellulose crystal

Excepting that a mixture of 50g of aqueous solution containing 1 % by weight of dispersed nanocellulose fiber and 50g of aqueous solution containing 1 % by weight of dispersed nanocellulose crystal was used instead of 100g of aqueous solution containing 1 % by weight of dispersed nanocellulose fiber, the same method as Preparation Example I-A1 was conducted to prepare isosorbide comprising nanocellulose fiber and nanocellulose crystal dispersed therein (solid dispersion). The solid dispersion comprised 1 % by weight of a mixture of nanocellulose fiber and nanocellulose crystal, based on total weight of the solid dispersion.

### Preparation Example I-C2: Preparation of dispersion comprising 3 % by weight of a mixture of nanocellulose fiber and nanocellulose crystal

Excepting that the amount of isosorbide was changed from 99g to 97g and a mixture of 150g of aqueous solution containing 1 % by weight of dispersed nanocellulose fiber and 150g of aqueous solution containing 1 % by weight of dispersed nanocellulose crystal was used instead of 100g of aqueous solution containing 1 % by weight of dispersed nanocellulose fiber, the same method as Preparation Example I-A1 was conducted to prepare isosorbide comprising nanocellulose fiber and nanocellulose crystal dispersed therein (solid dispersion). The solid dispersion comprised 3 % by weight of a mixture of nanocellulose fiber and nanocellulose crystal, based on total weight of the solid dispersion.

### Preparation Example I-C3: Preparation of dispersion comprising 5 % by weight of a mixture of nanocellulose fiber and nanocellulose crystal

Excepting that the amount of isosorbide was changed from 99g to 95g and a mixture of 250g of aqueous solution containing 1 % by weight of dispersed nanocellulose fiber and 250g of aqueous solution containing 1 % by weight of dispersed nanocellulose crystal was used instead of 100g of aqueous solution containing 1 % by weight of dispersed nanocellulose fiber, the same method as Preparation Example I-A1 was conducted to prepare isosorbide comprising nanocellulose fiber and nanocellulose crystal dispersed therein (solid dispersion). The solid dispersion comprised 5 % by weight of a mixture of nanocellulose fiber and nanocellulose crystal, based on total weight of the solid dispersion.

### Preparation Example I-C4: Preparation of dispersion comprising 10 % by weight of a mixture of nanocellulose fiber and nanocellulose crystal

Excepting that the amount of isosorbide was changed from 99g to 90g and a mixture of 500g of aqueous solution containing 1 % by weight of dispersed nanocellulose fiber and 500g of aqueous solution containing 1 % by weight of dispersed nanocellulose crystal was used instead of 100g of aqueous solution containing 1 % by weight of dispersed nanocellulose fiber, the same method as Preparation Example I-A1 was conducted to prepare isosorbide comprising nanocellulose fiber and nanocellulose crystal dispersed therein (solid dispersion). The solid dispersion comprised 10 % by weight of a mixture of nanocellulose fiber and nanocellulose crystal, based on total weight of the solid dispersion.

### [Polycarbonate resin composite using solid dispersion comprising nanocellulose]

### <Preparation and property evaluation of polycarbonate resin composite using solid dispersion comprising nanocellulose fiber and anhydrosugar alcohol>

### Example I-A1: Preparation of polycarbonate resin composite using solid dispersion of Preparation Example I-A1

Into a 5-necked flask connected to nitrogen gas line and vacuum pump for pressure reduction equipped with trap for byproduct removal and having agitator, thermometer and heater, 100g of solid dispersion prepared in Preparation Example I-A1, 29.6g of cyclohexane dimethanol and 190.6g of diphenyl carbonate were fed, and heated up to 100°C under nitrogen atmosphere, and then after confirming that the reactant materials were melted, 100mg of magnesium acetate tetrahydrate was added and agitation was started. After arriving at 160°C, the reaction was conducted while maintaining the temperature for 1 hour, and then the pressure was reduced slowly to 100 to 120 torr by using the vacuum pump, and while removing phenol generated as byproduct, the reaction was further conducted for 1 to 2 hours. Thereafter, the temperature was elevated slowly up to 220°C and the pressure was reduced to 5 to 10 torr, and the reaction was further conducted for 1 hour. As a result, about 130g of polycarbonate resin composite was obtained. The obtained polycarbonate resin composite was a transparent solid, and its number average molecular weight was about 30,500g/mol, and PDI was 1.7.

In order to measure the amount of nanocellulose fiber in the obtained polycarbonate resin composite, 50g of the polycarbonate resin composite was dissolved in 1L of chloroform and the crystalline residue was filtered and dried in a vacuum oven for about 24 hours, and then its weight as measured was 0.31g. Through this, the amount of nanocellulose fiber in the above-obtained polycarbonate resin composite was calculated as 0.62 % by weight.

By using the above-obtained polycarbonate resin composite, four (4) identical samples for tensile test were prepared according to ASTM D638. For the four test samples, tensile strength and tensile modulus were measured by using universal test machine (UTM), and as a result, the average tensile strength was 97 MPa, and the average tensile modulus was 2,900 MPa.

### Example I-A2: Preparation of polycarbonate resin composite using solid dispersion of Preparation Example I-A2

Excepting that 100g of solid dispersion prepared in Preparation Example I-A2 was used instead of 100g of solid dispersion prepared in Preparation Example I-A1, the same method as Example I-A1 was conducted to obtain about 128g of polycarbonate resin composite. The obtained polycarbonate resin composite was a transparent solid, and its number average molecular weight was about 30,210g/mol, and PDI was 1.7.

The amount of nanocellulose fiber in the obtained polycarbonate resin composite was measured by the same method as in Example I-A1, and the result was 1.9 % by weight. The tensile strength and tensile modulus of the obtained polycarbonate resin composite were measured by the same method as in Example I-A1, and as a result, the average tensile strength was 98.5 MPa, and the average tensile modulus was 2,923 MPa.

### Example I-A3: Preparation of polycarbonate resin composite using solid dispersion of Preparation Example I-A3

Excepting that 100g of solid dispersion prepared in Preparation Example I-A3 was used instead of 100g of solid dispersion prepared in Preparation Example I-A1, the same method as Example I-A1 was conducted to obtain about 126g of polycarbonate resin composite. The obtained polycarbonate resin composite was a transparent solid, and its number average molecular weight was about 30,620g/mol, and PDI was 1.8.

The amount of nanocellulose fiber in the obtained polycarbonate resin composite was measured by the same method as in Example I-A1, and the result was 3.1 % by weight. The tensile strength and tensile modulus of the obtained polycarbonate resin composite were measured by the same method as in Example I-A1, and as a result, the average tensile strength was 101.5 MPa, and the average tensile modulus was 2,950 MPa.

### Example I-A4: Preparation of polycarbonate resin composite using solid dispersion of Preparation Example I-A4

Excepting that 100g of solid dispersion prepared in Preparation Example I-A4 was used instead of 100g of solid dispersion prepared in Preparation Example I-A1, the same method as Example I-A1 was conducted to obtain about 130g of polycarbonate resin composite. The obtained polycarbonate resin composite was a transparent solid, and its number average molecular weight was about 30,840g/mol, and PDI was 1.7.

The amount of nanocellulose fiber in the obtained polycarbonate resin composite was measured by the same method as in Example I-A1, and the result was 6.4 % by weight. The tensile strength and tensile modulus of the obtained polycarbonate resin composite were measured by the same method as in Example I-A1, and as a result, the average tensile strength was 105.75 MPa, and the average tensile modulus was 2,990 MPa.

### <Preparation and property evaluation of polycarbonate resin composite using solid dispersion comprising nanocellulose crystal and anhydrosugar alcohol>

### Example I-B1: Preparation of polycarbonate resin composite using solid dispersion of Preparation Example I-B1

Excepting that 100g of solid dispersion prepared in Preparation Example I-B1 was used instead of 100g of solid dispersion prepared in Preparation Example I-A1, the same method as Example I-A1 was conducted to obtain about 125g of polycarbonate resin composite. The obtained polycarbonate resin composite was a transparent solid, and its number average molecular weight was about 30,200g/mol, and PDI was 1.8.

The amount of nanocellulose crystal in the obtained polycarbonate resin composite was measured by the same method as in Example I-A1, and the result was 0.59 % by weight. The tensile strength and tensile modulus of the obtained polycarbonate resin composite were measured by the same method as in Example I-A1, and as a result, the average tensile strength was 93.5 MPa, and the average tensile modulus was 2,700 MPa.

### Example I-B2: Preparation of polycarbonate resin composite using solid dispersion of Preparation Example I-B2

Excepting that 100g of solid dispersion prepared in Preparation Example I-B2 was used instead of 100g of solid dispersion prepared in Preparation Example I-A1, the same method as Example I-A1 was conducted to obtain about 128g of polycarbonate resin composite. The obtained polycarbonate resin composite was a transparent solid, and its number average molecular weight was about 30,150g/mol, and PDI was 1.6.

The amount of nanocellulose crystal in the obtained polycarbonate resin composite was measured by the same method as in Example I-A1, and the result was 1.8 % by weight. The tensile strength and tensile modulus of the obtained polycarbonate resin composite were measured by the same method as in Example I-A1, and as a result, the average tensile strength was 94.5 MPa, and the average tensile modulus was 2,783 MPa.

### Example I-B3: Preparation of polycarbonate resin composite using solid dispersion of Preparation Example I-B3

Excepting that 100g of solid dispersion prepared in Preparation Example I-B3 was used instead of 100g of solid dispersion prepared in Preparation Example I-A1, the same method as Example I-A1 was conducted to obtain about 131g of polycarbonate resin composite. The obtained polycarbonate resin composite was a transparent solid, and its number average molecular weight was about 30,500g/mol, and PDI was 1.6.

The amount of nanocellulose crystal in the obtained polycarbonate resin composite was measured by the same method as in Example I-A1, and the result was 3.5 % by weight. The tensile strength and tensile modulus of the obtained polycarbonate resin composite were measured by the same method as in Example I-A1, and as a result, the average tensile strength was 96.0 MPa, and the average tensile modulus was 2,818 MPa.

### Example I-B4: Preparation of polycarbonate resin composite using solid dispersion of Preparation Example I-B4

Excepting that 100g of solid dispersion prepared in Preparation Example I-B4 was used instead of 100g of solid dispersion prepared in Preparation Example I-A1, the same method as Example I-A1 was conducted to obtain about 125g of polycarbonate resin composite. The obtained polycarbonate resin composite was a transparent solid, and its number average molecular weight was about 30,670g/mol, and PDI was 1.9.

The amount of nanocellulose crystal in the obtained polycarbonate resin composite was measured by the same method as in Example I-A1, and the result was 6.2 % by weight. The tensile strength and tensile modulus of the obtained polycarbonate resin composite were measured by the same method as in Example I-A1, and as a result, the average tensile strength was 100.0 MPa, and the average tensile modulus was 2,930 MPa.

### <Preparation and property evaluation of polycarbonate resin composite using solid dispersion comprising a mixture of nanocellulose fiber and nanocellulose crystal, and anhydrosugar alcohol>

### Example I-C1: Preparation of polycarbonate resin composite using solid dispersion of Preparation Example I-C1

Excepting that 100g of solid dispersion prepared in Preparation Example I-C1 was used instead of 100g of solid dispersion prepared in Preparation Example I-A1, the same method as Example I-A1 was conducted to obtain about 128g of polycarbonate resin composite. The obtained polycarbonate resin composite was a transparent solid, and its number average molecular weight was about 30,650g/mol, and PDI was 1.8.

The total amount of nanocellulose fiber and nanocellulose crystal in the obtained polycarbonate resin composite was measured by the same method as in Example I-A1, and the result was 0.62 % by weight. The tensile strength and tensile modulus of the obtained polycarbonate resin composite were measured by the same method as in Example I-A1, and as a result, the average tensile strength was 94.5 MPa, and the average tensile modulus was 2,850 MPa.

### Example I-C2: Preparation of polycarbonate resin composite using solid dispersion of Preparation Example I-C2

Excepting that 100g of solid dispersion prepared in Preparation Example I-C2 was used instead of 100g of solid dispersion prepared in Preparation Example I-A1, the same method as Example I-A1 was conducted to obtain about 130g of polycarbonate resin composite. The obtained polycarbonate resin composite was a transparent solid, and its number average molecular weight was about 30,630g/mol, and PDI was 1.9.

The total amount of nanocellulose fiber and nanocellulose crystal in the obtained polycarbonate resin composite was measured by the same method as in Example I-A1, and the result was 1.87 % by weight. The tensile strength and tensile modulus of the obtained polycarbonate resin composite were measured by the same method as in Example I-A1, and as a result, the average tensile strength was 96.25 MPa, and the average tensile modulus was 2,900 MPa.

### Example I-C3: Preparation of polycarbonate resin composite using solid dispersion of Preparation Example I-C3

Excepting that 100g of solid dispersion prepared in Preparation Example I-C3 was used instead of 100g of solid dispersion prepared in Preparation Example I-A1, the same method as Example I-A1 was conducted to obtain about 130g of polycarbonate resin composite. The obtained polycarbonate resin composite was a transparent solid, and its number average molecular weight was about 30,800g/mol, and PDI was 1.8.

The total amount of nanocellulose fiber and nanocellulose crystal in the obtained polycarbonate resin composite was measured by the same method as in Example I-A1, and the result was 3.18 % by weight. The tensile strength and tensile modulus of the obtained polycarbonate resin composite were measured by the same method as in Example I-A1, and as a result, the average tensile strength was 100.5 MPa, and the average tensile modulus was 2,958 MPa.

### Example I-C4: Preparation of polycarbonate resin composite using solid dispersion of Preparation Example I-C4

Excepting that 100g of solid dispersion prepared in Preparation Example I-C4 was used instead of 100g of solid dispersion prepared in Preparation Example I-A1, the same method as Example I-A1 was conducted to obtain about 130g of polycarbonate resin composite. The obtained polycarbonate resin composite was a transparent solid, and its number average molecular weight was about 30,450g/mol, and PDI was 1.8.

The total amount of nanocellulose fiber and nanocellulose crystal in the obtained polycarbonate resin composite was measured by the same method as in Example I-A1, and the result was 6.49 % by weight. The tensile strength and tensile modulus of the obtained polycarbonate resin composite were measured by the same method as in Example I-A1, and as a result, the average tensile strength was 101.25 MPa, and the average tensile modulus was 2,993 MPa.

### <Evaluation of dispersion uniformity of nanocellulose particles in polycarbonate resin composite>

For each of the polycarbonate resin composites obtained in Examples I-A1 to I-A4, 1-B1 to I-B4, and I-C1 to I-C4, the tensile strength and tensile modulus, and average value and standard deviation thereof were measured for four (4) samples for tensile test, and the results are shown in the following Table 1.

**[Table 1]**

| Example | Tensile strength (MPa) | | | | | | Tensile modulus (MPa) | | | | | |
|---|---|---|---|---|---|---|---|---|---|---|---|---|
| | Sample | | | | Average | Standard deviation | Sample | Sample | Sample | Sample | Average | Standard deviation |
| | 1 | 2 | 3 | 4 | | | 1 | 2 | 3 | 4 | | |
| I-A1 | 96 | 97 | 97 | 98 | 97 | 0.71 | 2,910 | 2,900 | 2,890 | 2,900 | 2,900 | 7.10 |
| I-A2 | 99 | 98 | 98 | 99 | 98.5 | 0.50 | 2,910 | 2,930 | 2,920 | 2,930 | 2,923 | 8.30 |
| I-A3 | 102 | 101 | 100 | 103 | 101.5 | 1.12 | 2,950 | 2,940 | 2,950 | 2,960 | 2,950 | 7.10 |
| I-A4 | 106 | 105 | 106 | 106 | 105.75 | 0.43 | 2,980 | 2,990 | 2,990 | 3,000 | 2,990 | 7.10 |
| I-B1 | 93 | 93 | 94 | 94 | 93.5 | 0.50 | 2,700 | 2,690 | 2,700 | 2,710 | 2,700 | 7.10 |
| I-B2 | 94 | 95 | 94 | 95 | 94.5 | 0.50 | 2,790 | 2,780 | 2,780 | 2,780 | 2,783 | 4.61 |
| I-B3 | 95 | 97 | 96 | 96 | 96 | 0.71 | 2,810 | 2,820 | 2,820 | 2,820 | 2,818 | 4.36 |
| I-B4 | 101 | 99 | 100 | 100 | 100 | 0.71 | 2,930 | 2,940 | 2,930 | 2,920 | 2,930 | 7.10 |
| I-C1 | 95 | 94 | 94 | 95 | 94.5 | 0.50 | 2,850 | 2,860 | 2,840 | 2,850 | 2,850 | 7.10 |
| I-C2 | 97 | 96 | 95 | 97 | 96.25 | 0.83 | 2,890 | 2,900 | 2,910 | 2,900 | 2,900 | 7.10 |
| I-C3 | 101 | 101 | 100 | 100 | 100.5 | 0.50 | 2,950 | 2,950 | 2,960 | 2,970 | 2,958 | 8.30 |
| I-C4 | 100 | 102 | 101 | 102 | 101.25 | 0.83 | 3,000 | 3,000 | 2,980 | 2,990 | 2,993 | 8.30 |

As shown in the above Table 1, as a result of measuring the average and standard deviation of tensile strength for four (4) samples for tensile test of each of the polycarbonate resin composites obtained in Examples I-A1 to I-A4, I-B1 to I-B4, and I-C1 to I-C4 according to the present invention, the tensile strengths of the four (4) tensile test samples were equivalent such that the tensile strength deviations of the four (4) tensile test samples were so small as 1.12 MPa or less-from which it can be known that nanocellulose particles were dispersed uniformly in the polycarbonate resin composites.

In addition, as a result of measuring the average and standard deviation of tensile modulus for four (4) samples for tensile test of each of the polycarbonate resin composites obtained in Examples I-A1 to I-A4, I-B1 to I-B4, and I-C1 to I-C4 according to the present invention, the tensile moduli of the four (4) tensile test samples were equivalent such that the tensile modulus deviations of the four (4) tensile test samples were so small as 8.30 MPa or less-from which it can be known that nanocellulose particles were dispersed uniformly in the polycarbonate resin composites.

Furthermore, the average tensile strength values of four (4) samples for tensile test of each of the polycarbonate resin composites obtained in Examples I-A1 to I-A4, I-B1 to I-B4, and I-C1 to I-C4 according to the present invention were 93.5 MPa or more, and the average tensile modulus values thereof were 2,700 MPa or more-from which it can be known that the mechanical properties of the polycarbonate resin composites were excellent.

### [Part II]

### [Polycarbonate resin composite using melt dispersion comprising nanocellulose]

### <Preparation and property evaluation of polycarbonate resin composite using melt dispersion comprising nanocellulose fiber (NCF) and anhydrosugar alcohol>

### Example II-A1: Preparation of polycarbonate resin composite comprising 0.63 % by weight of nanocellulose fiber dispersed therein

Into a rotary evaporator, 99g of isosorbide (NOVASORB^{®}, Samyang Corporation) and 100g of aqueous solution (KB101, Asia Nanocellulose Co. Ltd.) wherein 1 % by weight of nanocellulose fiber was dispersed, were fed and mixed uniformly. Then, under a temperature condition of 80°C which was higher than the melting point of isosorbide, the mixture was melted while removing moisture under vacuum, to prepare the melt dispersion in liquid phase. The melt dispersion comprised 1 % by weight of nanocellulose fiber, based on total weight of the melt dispersion.

Then, into a 5-necked flask connected to nitrogen gas line and vacuum pump for pressure reduction equipped with trap for byproduct removal and having agitator, thermometer and heater, 100g of the above melt dispersion, 29.6g of cyclohexane dimethanol and 190.6g of diphenyl carbonate were fed, and heated up to 100°C under nitrogen atmosphere, and then after confirming that the reactant materials were melted, 100mg of magnesium acetate tetrahydrate was added and agitation was started. After arriving at 160°C, the reaction was conducted while maintaining the temperature for 1 hour, and then the pressure was reduced slowly to 100 to 120 torr by using the vacuum pump, and while removing phenol generated as byproduct, the reaction was further conducted for 1 to 2 hours. Thereafter, the temperature was elevated slowly up to 220°C and the pressure was reduced to 5 to 10 torr, and the reaction was further conducted for 1 hour. As a result, about 140g of polycarbonate resin composite was obtained. The obtained polycarbonate resin composite was a transparent solid, and its number average molecular weight was about 31,000g/mol, and PDI was 1.6.

In order to measure the amount of nanocellulose fiber in the obtained polycarbonate resin composite, 50g of the polycarbonate resin composite was dissolved in 1L of chloroform and the crystalline residue was filtered and dried in a vacuum oven for about 24 hours, and then its weight as measured was 0.316g. Through this, the amount of nanocellulose fiber in the above-obtained polycarbonate resin composite was calculated as 0.63 % by weight.

By using the above-obtained polycarbonate resin composite, four (4) identical samples for tensile test were prepared according to ASTM D638. For the four test samples, tensile strength and tensile modulus were measured by using universal test machine (UTM), and as a result, the average tensile strength was 95.75 MPa, and the average tensile modulus was 2,855 MPa.

### Example II-A2: Preparation of polycarbonate resin composite comprising 1.89 % by weight of nanocellulose fiber dispersed therein

Excepting that the amount of isosorbide was changed from 99g to 98g and the amount of aqueous solution containing 1 % by weight of dispersed nanocellulose fiber was changed from 100g to 200g, the same method as Example II-A1 was conducted to prepare the melt dispersion. The melt dispersion comprised 2 % by weight of nanocellulose fiber, based on total weight of the melt dispersion. Then, by using the melt dispersion, the same method as Example II-A1 was conducted to obtain 138g of polycarbonate resin composite. The obtained polycarbonate resin composite was a transparent solid, and its number average molecular weight was about 30,890g/mol, and PDI was 1.4.

The amount of nanocellulose fiber in the obtained polycarbonate resin composite was measured by the same method as in Example II-A1, and the result was 1.89 % by weight. The tensile strength and tensile modulus of the obtained polycarbonate resin composite were measured by the same method as in Example II-A1, and as a result, the average tensile strength was 98.0 MPa, and the average tensile modulus was 2,885 MPa.

### Example II-A3: Preparation of polycarbonate resin composite comprising 3.21 % by weight of nanocellulose fiber dispersed therein

Excepting that the amount of isosorbide was changed from 99g to 95g and the amount of aqueous solution containing 1 % by weight of dispersed nanocellulose fiber was changed from 100g to 500g, the same method as Example II-A1 was conducted to prepare the melt dispersion. The melt dispersion comprised 5 % by weight of nanocellulose fiber, based on total weight of the melt dispersion. Then, by using the melt dispersion, the same method as Example II-A1 was conducted to obtain 132g of polycarbonate resin composite. The obtained polycarbonate resin composite was a transparent solid, and its number average molecular weight was about 30,900g/mol, and PDI was 1.5.

The amount of nanocellulose fiber in the obtained polycarbonate resin composite was measured by the same method as in Example II-A1, and the result was 3.21 % by weight. The tensile strength and tensile modulus of the obtained polycarbonate resin composite were measured by the same method as in Example II-A1, and as a result, the average tensile strength was 100.5 MPa, and the average tensile modulus was 2,935 MPa.

### Example II-A4: Preparation of polycarbonate resin composite comprising 6.34 % by weight of nanocellulose fiber dispersed therein

Excepting that the amount of isosorbide was changed from 99g to 90g and the amount of aqueous solution containing 1 % by weight of dispersed nanocellulose fiber was changed from 100g to 1,000g, the same method as Example II-A1 was conducted to prepare the melt dispersion. The melt dispersion comprised 10 % by weight of nanocellulose fiber, based on total weight of the melt dispersion. Then, by using the melt dispersion, the same method as Example II-A1 was conducted to obtain 135g of polycarbonate resin composite. The obtained polycarbonate resin composite was a transparent solid, and its number average molecular weight was about 31,050g/mol, and PDI was 1.8.

The amount of nanocellulose fiber in the obtained polycarbonate resin composite was measured by the same method as in Example II-A1, and the result was 6.34 % by weight. The tensile strength and tensile modulus of the obtained polycarbonate resin composite were measured by the same method as in Example II-A1, and as a result, the average tensile strength was 102.25 MPa, and the average tensile modulus was 2,993 MPa.

### <Preparation and property evaluation of polycarbonate resin composite using melt dispersion comprising nanocellulose crystal (NCC) and anhydrosugar alcohol>

### Example II-B1: Preparation of polycarbonate resin composite comprising 0.61 % by weight of nanocellulose crystal dispersed therein

Excepting that 100g of aqueous solution (CelluForce) containing 1 % by weight of dispersed nanocellulose crystal was used instead of 100g of aqueous solution (KB101, Asia Nanocellulose Co. Ltd.) containing 1 % by weight of dispersed nanocellulose fiber, the same method as Example II-A1 was conducted to prepare the melt dispersion. The melt dispersion comprised 1 % by weight of nanocellulose crystal, based on total weight of the melt dispersion. Then, by using the melt dispersion, the same method as Example II-A1 was conducted to obtain 135g of polycarbonate resin composite. The obtained polycarbonate resin composite was a transparent solid, and its number average molecular weight was about 30,920g/mol, and PDI was 1.9.

The amount of nanocellulose crystal in the obtained polycarbonate resin composite was measured by the same method as in Example II-A1, and the result was 0.61 % by weight. The tensile strength and tensile modulus of the obtained polycarbonate resin composite were measured by the same method as in Example II-A1, and as a result, the average tensile strength was 92.25 MPa, and the average tensile modulus was 2,645 MPa.

### Example II-B2: Preparation of polycarbonate resin composite comprising 1.87 % by weight of nanocellulose crystal dispersed therein

Excepting that the amount of isosorbide was changed from 99g to 97g and 300g of the aqueous solution containing 1 % by weight of dispersed nanocellulose crystal was used instead of 100g of the aqueous solution containing 1 % by weight of dispersed nanocellulose fiber, the same method as Example II-A1 was conducted to prepare the melt dispersion. The melt dispersion comprised 3 % by weight of nanocellulose crystal, based on total weight of the melt dispersion. Then, by using the melt dispersion, the same method as Example II-A1 was conducted to obtain 130g of polycarbonate resin composite. The obtained polycarbonate resin composite was a transparent solid, and its number average molecular weight was about 30,990g/mol, and PDI was 1.4.

The amount of nanocellulose crystal in the obtained polycarbonate resin composite was measured by the same method as in Example II-A1, and the result was 1.87 % by weight. The tensile strength and tensile modulus of the obtained polycarbonate resin composite were measured by the same method as in Example II-A1, and as a result, the average tensile strength was 95.5 MPa, and the average tensile modulus was 2,693 MPa.

### Example II-B3: Preparation of polycarbonate resin composite comprising 3.2 % by weight of nanocellulose crystal dispersed therein

Excepting that the amount of isosorbide was changed from 99g to 95g and 500g of the aqueous solution containing 1 % by weight of dispersed nanocellulose crystal was used instead of 100g of the aqueous solution containing 1 % by weight of dispersed nanocellulose fiber, the same method as Example II-A1 was conducted to prepare the melt dispersion. The melt dispersion comprised 5 % by weight of nanocellulose crystal, based on total weight of the melt dispersion. Then, by using the melt dispersion, the same method as Example II-A1 was conducted to obtain 135g of polycarbonate resin composite. The obtained polycarbonate resin composite was a transparent solid, and its number average molecular weight was about 31,110g/mol, and PDI was 1.6.

The amount of nanocellulose crystal in the obtained polycarbonate resin composite was measured by the same method as in Example II-A1, and the result was 3.2 % by weight. The tensile strength and tensile modulus of the obtained polycarbonate resin composite were measured by the same method as in Example II-A1, and as a result, the average tensile strength was 96.25 MPa, and the average tensile modulus was 2,728 MPa.

### Example II-B4: Preparation of polycarbonate resin composite comprising 6.48 % by weight of nanocellulose crystal dispersed therein

Excepting that the amount of isosorbide was changed from 99g to 90g and 1,000g of the aqueous solution containing 1 % by weight of dispersed nanocellulose crystal was used instead of 100g of the aqueous solution containing 1 % by weight of dispersed nanocellulose fiber, the same method as Example II-A1 was conducted to prepare the melt dispersion. The melt dispersion comprised 10 % by weight of nanocellulose crystal, based on total weight of the melt dispersion. Then, by using the melt dispersion, the same method as Example II-A1 was conducted to obtain 132g of polycarbonate resin composite. The obtained polycarbonate resin composite was a transparent solid, and its number average molecular weight was about 31,050g/mol, and PDI was 1.8.

The amount of nanocellulose crystal in the obtained polycarbonate resin composite was measured by the same method as in Example II-A1, and the result was 6.48 % by weight. The tensile strength and tensile modulus of the obtained polycarbonate resin composite were measured by the same method as in Example II-A1, and as a result, the average tensile strength was 100.0 MPa, and the average tensile modulus was 2,795 MPa.

### <Preparation and property evaluation of polycarbonate resin composite using melt dispersion comprising a mixture of nanocellulose fiber and nanocellulose crystal, and anhydrosugar alcohol>

### Example II-C1: Preparation of polycarbonate resin composite comprising 0.60 % by weight of a mixture of nanocellulose fiber and nanocellulose crystal dispersed therein

Excepting that 50g of the aqueous solution containing 1 % by weight of dispersed nanocellulose fiber and 50g of the aqueous solution containing 1 % by weight of dispersed nanocellulose crystal were used instead of 100g of the aqueous solution containing 1 % by weight of dispersed nanocellulose fiber, the same method as Example II-A1 was conducted to prepare the melt dispersion. The melt dispersion comprised 1 % by weight of a mixture of nanocellulose fiber and nanocellulose crystal, based on total weight of the melt dispersion. Then, by using the melt dispersion, the same method as Example II-A1 was conducted to obtain 133g of polycarbonate resin composite. The obtained polycarbonate resin composite was a transparent solid, and its number average molecular weight was about 30,980g/mol, and PDI was 1.9.

The total amount of nanocellulose fiber and nanocellulose crystal in the obtained polycarbonate resin composite was measured by the same method as in Example II-A1, and the result was 0.60 % by weight. The tensile strength and tensile modulus of the obtained polycarbonate resin composite were measured by the same method as in Example II-A1, and as a result, the average tensile strength was 93.5 MPa, and the average tensile modulus was 2,800 MPa.

### Example II-C2: Preparation of polycarbonate resin composite comprising 1.92 % by weight of a mixture of nanocellulose fiber and nanocellulose crystal dispersed therein

Excepting that the amount of isosorbide was changed from 99g to 97g, and 150g of the aqueous solution containing 1 % by weight of dispersed nanocellulose fiber and 150g of the aqueous solution containing 1 % by weight of dispersed nanocellulose crystal were used instead of 100g of the aqueous solution containing 1 % by weight of dispersed nanocellulose fiber, the same method as Example II-A1 was conducted to prepare the melt dispersion. The melt dispersion comprised 3 % by weight of a mixture of nanocellulose fiber and nanocellulose crystal, based on total weight of the melt dispersion. Then, by using the melt dispersion, the same method as Example II-A1 was conducted to obtain 136g of polycarbonate resin composite. The obtained polycarbonate resin composite was a transparent solid, and its number average molecular weight was about 30,850g/mol, and PDI was 1.7.

The total amount of nanocellulose fiber and nanocellulose crystal in the obtained polycarbonate resin composite was measured by the same method as in Example II-A1, and the result was 1.92 % by weight. The tensile strength and tensile modulus of the obtained polycarbonate resin composite were measured by the same method as in Example II-A1, and as a result, the average tensile strength was 94.75 MPa, and the average tensile modulus was 2,853 MPa.

### Example II-C3: Preparation of polycarbonate resin composite comprising 3.19 % by weight of a mixture of nanocellulose fiber and nanocellulose crystal dispersed therein

Excepting that the amount of isosorbide was changed from 99g to 95g, and 250g of the aqueous solution containing 1 % by weight of dispersed nanocellulose fiber and 250g of the aqueous solution containing 1 % by weight of dispersed nanocellulose crystal were used instead of 100g of the aqueous solution containing 1 % by weight of dispersed nanocellulose fiber, the same method as Example II-A1 was conducted to prepare the melt dispersion. The melt dispersion comprised 5 % by weight of a mixture of nanocellulose fiber and nanocellulose crystal, based on total weight of the melt dispersion. Then, by using the melt dispersion, the same method as Example II-A1 was conducted to obtain 135g of polycarbonate resin composite. The obtained polycarbonate resin composite was a transparent solid, and its number average molecular weight was about 30,870g/mol, and PDI was 1.6.

The total amount of nanocellulose fiber and nanocellulose crystal in the obtained polycarbonate resin composite was measured by the same method as in Example II-A1, and the result was 3.19 % by weight. The tensile strength and tensile modulus of the obtained polycarbonate resin composite were measured by the same method as in Example II-A1, and as a result, the average tensile strength was 96.75 MPa, and the average tensile modulus was 2,898 MPa.

### Example II-C4: Preparation of polycarbonate resin composite comprising 6.29 % by weight of a mixture of nanocellulose fiber and nanocellulose crystal dispersed therein

Excepting that the amount of isosorbide was changed from 99g to 90g, and 500g of the aqueous solution containing 1 % by weight of dispersed nanocellulose fiber and 500g of the aqueous solution containing 1 % by weight of dispersed nanocellulose crystal were used instead of 100g of the aqueous solution containing 1 % by weight of dispersed nanocellulose fiber, the same method as Example II-A1 was conducted to prepare the melt dispersion. The melt dispersion comprised 10 % by weight of a mixture of nanocellulose fiber and nanocellulose crystal, based on total weight of the melt dispersion. Then, by using the melt dispersion, the same method as Example II-A1 was conducted to obtain 138g of polycarbonate resin composite. The obtained polycarbonate resin composite was a transparent solid, and its number average molecular weight was about 30,660g/mol, and PDI was 1.7.

The total amount of nanocellulose fiber and nanocellulose crystal in the obtained polycarbonate resin composite was measured by the same method as in Example II-A1, and the result was 6.29 % by weight. The tensile strength and tensile modulus of the obtained polycarbonate resin composite were measured by the same method as in Example II-A1, and as a result, the average tensile strength was 100.75 MPa, and the average tensile modulus was 2,935 MPa.

### <Evaluation of dispersion uniformity of nanocellulose particles in polycarbonate resin composite>

For each of the polycarbonate resin composites obtained in Examples II-A1 to II-A4, II-B1 to II-B4, and II-C1 to II-C4, the tensile strength and tensile modulus, and average value and standard deviation thereof were measured for four (4) samples for tensile test, and the results are shown in the following Table 2.

**[Table 2]**

| Example | Tensile strength (MPa) | | | | | | Tensile modulus (MPa) | | | | | |
|---|---|---|---|---|---|---|---|---|---|---|---|---|
| | Sample | | | | Average | Standard deviation | Sample | Sample | Sample | Sample | Average | Standard deviation |
| | 1 | 2 | 3 | 4 | | | 1 | 2 | 3 | 4 | | |
| II-A1 | 95 | 96 | 95 | 97 | 95.75 | 0.83 | 2,860 | 2,850 | 2,860 | 2,850 | 2,855 | 5 |
| II-A2 | 98 | 99 | 97 | 98 | 98 | 0.71 | 2,880 | 2,890 | 2,880 | 2,890 | 2,885 | 5 |
| II-A3 | 102 | 100 | 99 | 101 | 100.5 | 1.12 | 2,940 | 2,940 | 2,930 | 2,930 | 2,935 | 5 |
| II-A4 | 102 | 103 | 102 | 102 | 102.25 | 0.43 | 2,990 | 3,000 | 2,990 | 2,990 | 2,993 | 4.36 |
| II-B1 | 91 | 92 | 93 | 93 | 92.25 | 0.83 | 2,640 | 2,640 | 2,650 | 2,650 | 2,645 | 5 |
| II-B2 | 96 | 96 | 95 | 95 | 95.5 | 0.50 | 2,690 | 2,680 | 2,700 | 2,700 | 2,693 | 8.31 |
| II-B3 | 97 | 96 | 95 | 97 | 96.25 | 0.83 | 2,720 | 2,730 | 2,730 | 2,730 | 2,728 | 4.36 |
| II-B4 | 99 | 100 | 100 | 101 | 100 | 0.71 | 2,800 | 2,800 | 2,790 | 2,790 | 2,795 | 5 |
| II-C1 | 94 | 93 | 93 | 94 | 93.5 | 0.50 | 2,790 | 2,800 | 2,800 | 2,810 | 2,800 | 7.10 |
| II-C2 | 94 | 95 | 94 | 96 | 94.75 | 0.83 | 2,850 | 2,850 | 2,860 | 2,850 | 2,853 | 4.36 |
| II-C3 | 97 | 97 | 97 | 96 | 96.75 | 0.43 | 2,890 | 2,900 | 2,900 | 2,900 | 2,898 | 4.36 |
| II-C4 | 100 | 101 | 100 | 102 | 100.75 | 0.83 | 2,940 | 2,930 | 2,940 | 2,930 | 2,935 | 5 |

As shown in the above Table 2, as a result of measuring the average and standard deviation of tensile strength for four (4) samples for tensile test of each of the polycarbonate resin composites obtained in Examples II-A1 to II-A4, II-B1 to II-B4, and II-C1 to II-C4 according to the present invention, the tensile strengths of the four (4) tensile test samples were equivalent such that the tensile strength deviations of the four (4) tensile test samples were so small as 1.12 MPa or less-from which it can be known that nanocellulose particles were dispersed uniformly in the polycarbonate resin composites.

In addition, as a result of measuring the average and standard deviation of tensile modulus for four (4) samples for tensile test of each of the polycarbonate resin composites obtained in Examples II-A1 to II-A4, II-B1 to II-B4, and II-C1 to II-C4 according to the present invention, the tensile moduli of the four (4) tensile test samples were equivalent such that the tensile modulus deviations of the four (4) tensile test samples were so small as 8.31 MPa or less-from which it can be known that nanocellulose particles were dispersed uniformly in the polycarbonate resin composites.

Furthermore, the average tensile strength values of four (4) samples for tensile test of each of the polycarbonate resin composites obtained in Examples II-A1 to II-A4, II-B1 to II-B4, and II-C1 to II-C4 according to the present invention were 92.25 MPa or more, and the average tensile modulus values thereof were 2,645 MPa or more-from which it can be known that the mechanical properties of the polycarbonate resin composites were excellent.

### [Comparative Examples]

### Comparative Example A1: Preparation and property evaluation of polycarbonate resin using anhydrosugar alcohol wherein nanocellulose particles were not dispersed

Excepting that 100g of pure isosorbide (NOVASORB^{®}, Samyang Corporation) was used instead of 100g of the solid dispersion or melt dispersion prepared in the above Examples, the same method as the above Examples was conducted to obtain about 128g of polycarbonate resin. The obtained polycarbonate resin was a transparent solid, and its number average molecular weight was about 30,100g/mol, and PDI was 1.6.

The obtained polycarbonate resin did not comprise nanocellulose particles, and its tensile strength and tensile modulus were measured by the same method as in the above Examples, and as a result, the average tensile strength was 65.0 MPa, and the average tensile modulus was 2,000 MPa.

It can be confirmed that as compared with the polycarbonate resin composites of the above Examples according to the present invention, the polycarbonate resin not comprising nanocellulose particles of Comparative Example A1 showed very low average values of both of tensile strength and tensile modulus-i.e., poorer mechanical properties.

### Comparative Example B1: Preparation and property evaluation of polycarbonate resin composite using liquid dispersion wherein 1 % by weight of nanocellulose fiber powder was fed directly

In an oven at 70°C, 99g of isosorbide (NOVASORB^{®}, Samyang Corporation) was heated to obtain 99g of melted isosorbide. To the obtained 99g of melted isosorbide, 1g of nanocellulose fiber in powder form was fed directly, and agitated to disperse the nanocellulose fiber in the melted isosorbide. Then, by using a sonicator, the dispersing was further conducted at the same temperature for about 1 hour, to prepare isosorbide comprising nanocellulose fiber dispersed therein (liquid dispersion). The liquid dispersion comprised 1 % by weight of nanocellulose fiber, based on total weight of the liquid dispersion.

Then, excepting that 100g of the obtained liquid dispersion was used instead of 100g of the solid dispersion or melt dispersion prepared in the above Examples, the same method as the above Examples was conducted to obtain about 132g of polycarbonate resin composite. The obtained polycarbonate resin composite was a transparent solid, and its number average molecular weight was about 30,250g/mol, and PDI was 1.7.

The amount of nanocellulose fiber in the obtained polycarbonate resin composite was measured by the same method as in the above Examples, and the result was 0.52 % by weight. The tensile strength and tensile modulus of the obtained polycarbonate resin composite were measured by the same method as in the above Examples, and as a result, the average tensile strength was 73.3 MPa, and the average tensile modulus was 2,450 MPa.

It can be confirmed that as compared with the polycarbonate resin composites of the above Examples according to the present invention, the polycarbonate resin composite of Comparative Example B1 showed low average values of both of tensile strength and tensile modulus-i.e., relatively poorer mechanical properties.

### Comparative Example B2: Preparation and property evaluation of polycarbonate resin composite using liquid dispersion wherein 10 % by weight of nanocellulose fiber powder was fed directly

Excepting that the amount of isosorbide was changed from 99g to 90g, and the amount of nanocellulose fiber in powder form was changed from 1g to 10g, the same method as Comparative Example B 1 was conducted to obtain isosorbide comprising nanocellulose fiber dispersed therein (liquid dispersion). The liquid dispersion comprised 10 % by weight of nanocellulose fiber, based on total weight of the liquid dispersion.

Then, excepting that 100g of the obtained liquid dispersion was used instead of 100g of the solid dispersion or melt dispersion prepared in the above Examples, the same method as the above Examples was conducted to obtain about 129g of polycarbonate resin composite. The obtained polycarbonate resin composite was a transparent solid, and its number average molecular weight was about 30,150g/mol, and PDI was 1.8.

The amount of nanocellulose fiber in the obtained polycarbonate resin composite was measured by the same method as in the above Examples, and the result was 3.0 % by weight. The tensile strength and tensile modulus of the obtained polycarbonate resin composite were measured by the same method as in the above Examples, and as a result, the average tensile strength was 80.0 MPa, and the average tensile modulus was 2,500 MPa.

It can be confirmed that as compared with the polycarbonate resin composites of the above Examples according to the present invention, the polycarbonate resin composite of Comparative Example B2 showed low average values of both of tensile strength and tensile modulus-i.e., relatively poorer mechanical properties.

### <Evaluation of dispersion uniformity of nanocellulose particles in polycarbonate resin composite>

For each of the polycarbonate resin composites obtained in Comparative Examples B1 and B2, the tensile strength and tensile modulus, and average value and standard deviation thereof were measured for four (4) samples for tensile test, and the results are shown in the following Table 3.

**[Table 3]**

| Comparative Example | Tensile strength (MPa) | | | | | | Tensile modulus (MPa) | | | | | |
|---|---|---|---|---|---|---|---|---|---|---|---|---|
| | Sample | | | | Average | Standard deviation | Sample | Sample | Sample | Sample | Average | Standard deviation |
| | 1 | 2 | 3 | 4 | | | 1 | 2 | 3 | 4 | | |
| B1 | 70 | 78 | 68 | 77 | 73.3 | 3.27 | 2,100 | 2,800 | 2,000 | 2,900 | 2,450 | 403 |
| B2 | 75 | 86 | 70 | 89 | 80.0 | 7.78 | 2,200 | 2,600 | 2,800 | 2,400 | 2,500 | 224 |

As shown in the above Table 3, in case of Comparative Examples B1 and B2 not according to the present invention, nanocellulose particles were not dispersed uniformly in the polycarbonate resin composite, and thus the tensile strength and tensile modulus showed large deviation according to the measured tensile test samples.

Concretely, as a result of measuring the average and standard deviation of tensile strength for four (4) samples for tensile test of each of the polycarbonate resin composites obtained in Comparative Examples B1 and B2, the tensile strength deviations of the four (4) tensile test samples were so large as ranging from 3.27 MPa to 7.78 MPa-which means that nanocellulose particles were dispersed non-uniformly in the polycarbonate resin composites.

Also concretely, as a result of measuring the average and standard deviation of tensile modulus for four (4) samples for tensile test of each of the polycarbonate resin composites obtained in Comparative Examples B1 and B2, the tensile modulus deviations of the four (4) tensile test samples were so large as ranging from 224 MPa to 403 MPa-which means that nanocellulose particles were dispersed non-uniformly in the polycarbonate resin composites.

As can be seen from above, in case of the above Examples according to the present invention, nanocellulose particles were dispersed uniformly in the polycarbonate resin composite, and thus the tensile strength and tensile modulus were high and uniform. However, in case of Comparative Examples B1 and B2 not according to the present invention, nanocellulose particles were not dispersed uniformly in the polycarbonate resin composite, and thus, as compared with the polycarbonate resin composites of the above Examples according to the present invention, their tensile strength and tensile modulus were relatively poorer and the properties were not uniform.

## Claims

1. A polycarbonate composite comprising matrix resin and nanomaterial dispersed in the matrix resin,
wherein the matrix resin is polycarbonate resin which is a polymerization reaction product of a diol component comprising a solid dispersion or melt dispersion of anhydrosugar alcohol in which the nanomaterial is dispersed, and a carbonic acid diester component, and
wherein the solid dispersion or melt dispersion of anhydrosugar alcohol is that obtained by incorporating the nanomaterial as aqueous dispersion form into the anhydrosugar alcohol.

2. The polycarbonate composite of Claim 1, wherein the nanomaterial is selected from the group consisting of nanocellulose, carbon nanofiber, carbon nanotube, iron, aluminum, chromium, nickel, cobalt, zinc, tungsten, indium, tin, palladium, zirconium, titanium, copper, silver, gold, platinum, kaolin, clay, talc, mica, silica, bentonite, dolomite, calcium silicate, magnesium silicate, asbestos, calcium carbonate, magnesium carbonate, barium carbonate, calcium sulfate, barium sulfate, aluminum sulfate, aluminum hydroxide, iron hydroxide, aluminum silicate, zirconium oxide, magnesium oxide, aluminum oxide, titanium oxide, iron oxide, zinc oxide, antimony trioxide, indium oxide, indium tin oxide, silicon carbide, silicon nitride, boron nitride, barium titanate, diatomite, carbon black, rock wool, graphene, graphite, graphene oxide, azo-based compound, diazo-based compound, condensed azo-based compound, thioindigo-based compound, indanthrone-based compound, quinacridone-based compound, anthraquinone-based compound, benzimidazolone-based compounds, perylene-based compounds, phthalocyanine-based compounds, anthrapyridine-based compounds, dioxazine-based compounds, polyethylene resins, polypropylene resins, polyester resins, nylon resins, polyamide resins, aramid resins, urethane resins, polystyrene resins, polylactic acid, cellulose acetate fiber, hemicellulose, lignin, chitin, chitosan, starch, or mixture thereof.

3. The polycarbonate composite of Claim 1, wherein the nanomaterial is selected from the group consisting of nanocellulose, carbon nanofiber, carbon nanotube or mixture thereof.

4. The polycarbonate composite of Claim 3, wherein the nanocellulose is selected from the group consisting of nanocellulose fiber, nanocellulose crystal or mixture thereof, and the carbon nanotube is selected from the group consisting of single-walled carbon nanotube, multi-walled carbon nanotube or mixture thereof.

5. The polycarbonate composite of Claim 1, wherein the amount of the nanomaterial is from 0.2 % by weight to 10 % by weight, based on total weight of the composite.

6. The polycarbonate composite of Claim 1, wherein the anhydrosugar alcohol is monoanhydrosugar alcohol, dianhydrosugar alcohol or mixture thereof.

7. The polycarbonate composite of Claim 1, wherein the solid dispersion of anhydrosugar alcohol is that obtained by adding the nanomaterial as aqueous dispersion form to anhydrosugar alcohol and mixing them, melting the mixture at a temperature equal to or higher than the melting point of the anhydrosugar alcohol while removing moisture therefrom, and then cooling the melted mixture to room temperature.

8. The polycarbonate composite of Claim 1, wherein the melt dispersion of anhydrosugar alcohol is that obtained by adding the nanomaterial as aqueous dispersion form to anhydrosugar alcohol and mixing them, and melting the mixture at a temperature equal to or higher than the melting point of the anhydrosugar alcohol while removing moisture therefrom.

9. The polycarbonate composite of Claim 1, wherein the carbonic acid diester component is a carbonic acid diester component represented by the following chemical formula 1: 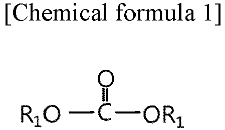 wherein each R₁ may independently be selected from unsubstituted or halogen-substituted, alkyl group having 1 to 20 carbon atoms, aryl group having 6 to 20 carbon atoms or aralkyl group having 7 to 25 carbon atoms.

10. The polycarbonate composite of Claim 1, wherein the diol component further comprises additional diol component other than the solid dispersion or melt dispersion of anhydrosugar alcohol.

11. The polycarbonate composite of Claim 10, wherein the additional diol component is a diol component represented by the following chemical formula 2:
[Chemical formula 2] HO-X-OH
wherein X represents mononuclear or polynuclear arylene group having 6 to 30 carbon atoms; linear alkylene group having 1 to 15 carbon atoms; branched alkylene group having 3 to 15 carbon atoms; or cyclic alkylene group having 3 to 15 carbon atoms, and each of the arylene group, linear alkylene group, branched alkylene group and cyclic alkylene group may be unsubstituted or substituted with halogen atom, alkyl group, cycloalkyl group, alkenyl group, alkoxy group, aryl group, nitro group or carboxyl group.

12. The polycarbonate composite of Claim 1, which exhibits a tensile strength greater than 80 MPa.

13. The polycarbonate composite of Claim 1, which exhibits a tensile modulus greater than 2,500 MPa.

14. The polycarbonate composite of Claim 1, which exhibits a tensile strength standard deviation of 3 MPa or less.

15. The polycarbonate composite of Claim 1, which exhibits a tensile modulus standard deviation of 200 MPa or less.

16. A method for preparing a polycarbonate composite, comprising a step of polymerization reaction of a diol component comprising a solid dispersion or melt dispersion of anhydrosugar alcohol in which the nanomaterial is dispersed, and a carbonic acid diester component,
wherein the solid dispersion or melt dispersion of anhydrosugar alcohol is that obtained by incorporating the nanomaterial as aqueous dispersion form into the anhydrosugar alcohol.

17. The method for preparing a polycarbonate composite of Claim 16, wherein the solid dispersion of anhydrosugar alcohol is that obtained by adding the nanomaterial as aqueous dispersion form to anhydrosugar alcohol and mixing them, melting the mixture at a temperature equal to or higher than the melting point of the anhydrosugar alcohol while removing moisture therefrom, and then cooling the melted mixture to room temperature.

18. The method for preparing a polycarbonate composite of Claim 16, the melt dispersion of anhydrosugar alcohol is that obtained by adding the nanomaterial as aqueous dispersion form to anhydrosugar alcohol and mixing them, and melting the mixture at a temperature equal to or higher than the melting point of the anhydrosugar alcohol while removing moisture therefrom.

19. A molded article comprising the polycarbonate composite of any one of Claims 1 to 15.
